# EUROPEAN PATENT APPLICATION

(11) **EP 1 622 327 A1**
(43) Date of publication of application: **01.02.2006**
(21) Application number: 05106857.5
(22) Date of filing: 26.07.2005
(51) Int. Cl.: H04L 12/58

(54) **System for sending, receipt and analysis of electronic messages**

(30) Priority: 28.07.2004 AU 2004100604
(71) Applicant: MGM WIRELESS HOLDINGS PTY LTD, Rose Park SA 5067 (AU)
(72) Inventor: Hurd, Mark, Rose Park South Australia 5067 (AU); Fortunatow, Mark, Rose Park South Australia 5067 (AU)
(74) Representative: Olsson, Jan

(57) **Abstract**

An electronic messaging system including a client computer adapted to receive transaction data pertinent to the sending of electronic messages, and to analyse the transactional data, alone or in combination with other data stored by the client computer to produce a selection of recipient addresses and content suitable for electronic messages to be sent over an electronic messaging facility and to receive electronic messages in reply and analyse the messages to associate each received electronic message with the sent electronic message to which it is a reply. Reports are formulated based on the characteristics of said message data, the client computer being further adapted to send such reports to a selected one or more recipients. An application to school attendance rolls is disclosed.

## Description

This invention relates to the field of the automated sending and receipt of electronic messages. In particular it relates to electronic messages using message systems associated with mobile telephony or email.

### TECHNICAL FIELD

There are a number of electronic messaging systems available to the general public in the industrialised world. These include email and the messaging systems associated with mobile telephony networks. These latter methods, often generically referred to as "text messaging" or "texting" include SMS (short message service) and MMS (multi media message service) associated with the GSM (Global System for Mobiles) mobile telephony systems.

It is likely that other messaging systems will be developed in the future as mobile communication technology evolves.

Electronic messages are sent asynchronously- that is there is no requirement that contact be established between the sender and the receiver prior to the message being sent. The message is composed by the sender in a form suitable to be stored by the messaging system and forwarded to the recipient. The delay in receipt of the message by the receiver usually now quite short but in general is not guaranteed by the messaging system.

Thus electronic messaging is, in its speed of operation, somewhat analogous with telephony. However this basic underlying store and forward method of operation has more in common with the postal service, except of course for the speed of operation.

### BACKGROUND ART

The advantages of immediacy due to this telephony like behaviour have been taken up enthusiastically in commercial products and in business use. Opportunities associated with its postal like nature have been less well exploited. Further, the problems which were understood and solved in the postal arena reemerge in the field of electronic messaging, but the postal solutions are inadequate to deal with the increased pace.

For example in the postal system within a company, mail arrives once a day and is sorted by a secretary who may apply a quite sophisticated set of rules concerning sender, receiver and content in order to effectively redirect the mail including direction to multiple destinations by way of copying, and may also perform extraction of standardized data from the information within the mail.

Attempts to perform a similar function manually for electronic messages tend to fail for a variety of reasons.

Delivery of messages may not come through a common point, thus making a standardised treatment impossible.

The messages generally arrive one at a time, meaning that messages must either be manually processed continuously r unacceptably long delays must be introduced into the handling.

Further, the messages form a valuable data resource. If the messages are not recorded and analysed this resource is lost.

Automatic systems utilising the telephony like immediacy of electronic messaging have been proposed. There are known systems for producing automated outgoing electronic messages in response to certain triggers or on the basis of analysis of certain data streams.

For example there is a known system which analyses the attendance roll data collected in schools each morning and automatically sends messages to the parent or guardian of the absent students requesting confirmation that the absence is authorised. This system may also include means to receive and display responses to these messages.

However the responses must then be dealt with manually and data transcribed to other systems if further analysis is desired to be undertaken.

It is an object of the present invention to provide an electronic messaging system that overcomes or at least substantially ameliorates the problems associated with the prior art.

Other objects and advantages of the present invention will become apparent from the following description, taken in connection with the accompanying drawings, wherein, by way of illustration and example, an embodiment of the present invention is disclosed.

### DISCLOSURE OF THE INVENTION

In one form of the invention there is provided an electronic messaging system including means to receive and store a dataset; means to analyses said stored data; means to select a plurality of recipients of an electronic message based on said data; means to formulate an appropriate first electronic message to send to each of said selected recipients based on said data, alone or in combination with other stored data, thus forming a plurality of first electronic messages; means to send said plurality of first electronic messages to recipients; means to receive one or more second electronic messages in reply; means to record said first and second electronic messages and the details of the sending of the messages as message data; means to associate each said second electronic message with the first electronic message to which it is a reply.

In preference there are included means to analyse the message data to formulate reports based on the characteristics of said message data further including means to send such reports to a selected one or more recipients.

In a further form , the invention may be said to lie in an electronic messaging system including a client computer adapted to receive transaction data, said transaction data containing information pertinent to the sending of electronic messages, said client computer being adapted to analyse the transactional data, alone or in combination with other data stored by the client computer, the result of such analysis being a selection of recipient addresses and content suitable for a plurality of first electronic messages, said addresses and content being communicated to a gateway computer for transmission over an electronic messaging facility as first electronic messages, said gateway being adapted to receive second electronic messages addressed to the client computer from the electronic messaging facility and to direct such messages to the client computer said client computer being aclapted to receive such second electronic messages, the client computer being further adapted to analyse said second electronic messages and to associate each second electronic message with the first electronic message to which the second electronic message is a reply.

In preference, the client computer is further adapted to analyse message data, being the first and second electronic messages and details of the sending and receipt of those messages, to formulate reports based on the characteristics of said message data, the client computer being further adapted to send such reports to a selected one or more redpients.

In preference, the electronic messaging facility is a mobile telephony network adapted to carry SMS and/or MMS traffic.

In preference, the electronic messaging facility is an email system.

In preference, the transaction data is a school attendance roll.

In preference, the first electronic messages are sent to parents or guardians of students marked on the roll as absent or late without explanation informing them of this absence or lateness, and the second electronic messages are responses to the first messages indicating whether or not the absence or lateness is authorised.

In preference, the reports correlate the reported absence or lateness of a particular student with that student's historical attendance record.

In a yet further form the invention may be said to lie in a method of analysis of electronic messaging including the steps of;
providing a system for sending and receiving electronic messages as computer data;
receiving transactional data pertinent to sending electronic messages;
storing rules for the analysis of said transactional data;
storing templates for the construction of electronic messages;
using said rules and templates to construct an electronic message based on the transactional data, including selection of one or more recipient addresses; sending said electronic messages and receiving any electronic messages in reply;
associating each of the reply messages with the sent message to which it is a reply.

In preference, the method further includes the steps of analysing the sent and reply message data to formulate reports based upon characteristics of that data;
communicating said reports to authorised recipients.

### BRIEF DESCRIPTION OF THE DRAWINGS

For a better understanding of this invention it will now be described with respect to an embodiment which will be described herein with the assistance of drawings wherein:
Figure 1 is a block diagram of the logical units included in a generic implementation of a messaging system of the invention.
Figure 2 is a block diagram of the logical units included in a particular embodiment of a messaging system of the invention.

### BEST MODE FOR CARRYING OUT THE INVENTION

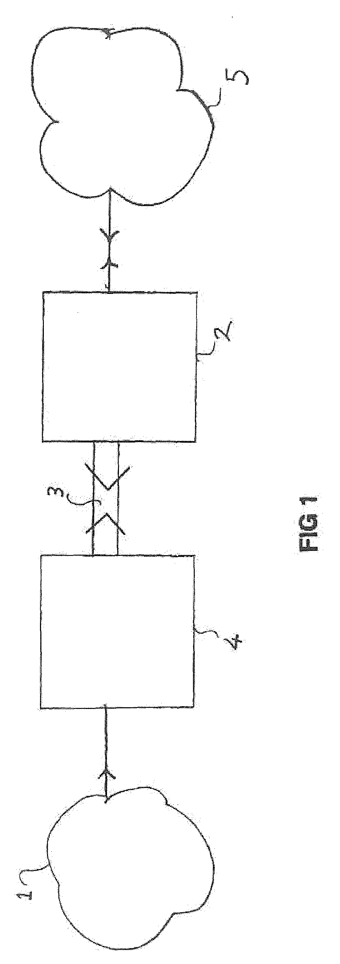

Referring now to Figure 1 there is a data source 1 which provides transaction data concerning a process to be monitored. The process can be any process in which there is a requirement for many communication messages to be made in response to many triggers. The data from the data source is communicated to a client server 2. The primary function of the client server is to formulate electronic messages. It is able to do this in three ways.

Messages can be formulated directly by an operator of the client server. The operator directly specifies the content of the message and the recipients of the message.

The message may be formulated entirely in response to the data from the data source. The data includes all necessary details of the message and the recipient or recipients. The client server formulates this information into an appropriate electronic message.

More usually the message is formed as a combination of information stored by the client server with the incoming data. Rules and templates are stored in the client server and these are applied to the data from a data source. The combination of these elements formulates the electronic message.

The formulated electronic messages are passed via a communication media 3 to a gateway server 4.

The gateway server receives the electronic messages from the client server and processes them to form an electronic message appropriate to the type of electronic messaging facility with which the said gateway server is associated.

The electronic messages are then passed to the electronic messaging facility 5 for distribution to recipients. This electronic messaging facility is of a type associated with the particular gateway server. Where the message type is to be SMS or MSS then this message system is a mobile telephony network. Where the message type is to be email this system is an email server.

Details of the incoming data and the sent messages are recorded by the client server.

The electronic message system also has associated with it an address appropriate to the type of electronic messaging facility which is in use. Messages directed to this address are passed by the electronic messaging facility 5 to the gateway server 4. The gateway server stores the message. The client server will regularly or at specified times, poll the gateway server 4 to determine if there are any messages addressed to the client server waiting. The client server will then receive the messages from the gateway server.

The client server records each incoming electronic message including the details of the arrival time of the message as communicated from the gateway server.

The client server analyses the incoming message in accordance with the rules and templates stored within it.

The client server may, in response to these rules, communicate specific received electronic messages to associated recipients or distribution lists. In the simplest case all messages from a particular sender will be forwarded to a specific recipient. However the rule may be more complex with the content of the incoming electronic message being searched for specific keywords in order to determine the appropriate recipient.

The client server may also collate and analysis replies including cross checking with its own list of messages sent in order to create reports setting out information cross referenced between the replies and the messages sent. These reports may then be sent out by electronic messaging using the gateway messaging facilities or by a separate electronic messaging path. There may also be printed or a simple alert to their presence communicated to a person in authority, with an operator then being able to access the reports as required.

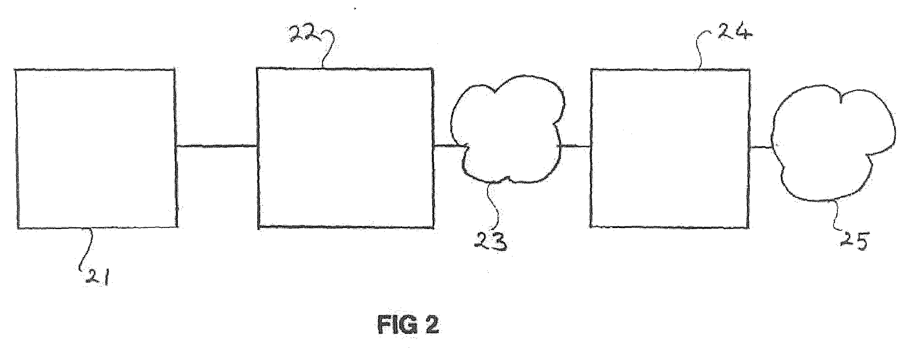

Figure 2 shows a particular embodiment of the invention.

The application in this case is monitoring of student attendance at schools.

Every school morning the teacher or other person in authority marks a roll indicating which students are present or absent. The roll may also indicate students who are late.

This transactional data is input into a database. In this case the database is independent of the electronic messaging system being a School Management System 21. Data from this School Management System 21 is communicated to the school administration computer 22 which is acting as the client server for the electronic messaging system.

The client server applies a set of rules and templates which have been previously input. It then formulates a series of electronic messages to be sent to the parents or guardians of students who are late or absent without explanation. In this case the electronic messages are being prepared for transmission by a GSM telephony network 25 as SMS messages.

The recipient addresses are accordingly mobile telephone numbers. These may be provided directly from the School Administration System or they may be inserted by the client server based on a database of student names and contact details held by the client server.

The content of the messages is set by a template associated with the particular rule in use. This template may be the same for all recipients or it may have data from the School Administration System message or from the client server's own database merged into it.

The formulated SMS messages with the recipient telephone numbers are communicated via the internet 23 to a service provider 24.

The service provider 24 receives the messages and passes them to a GSM network 25 for transmission to the recipients.

The message passing over the internet is encrypted using any appropriate encryption method. The message further includes details sufficient to ensure that the service provider is able to receive payment for transmitting the messages. In this case a recharge paid system is used which ensures that no pre-existing relationship between the operator of the client server and the service provider is necessary. The message from the client server needs only to include a recharge code indicating that the message cost should be debited from a previously paid credit amount held by the service provider.

The service provider also provides the termination point from the GSM network for the telephone numbers which form the address of the client server for the purpose of receiving responses to the messages.

The parents or guardians upon receipt of the SMS messages indicating the truancy of their charge may then respond indicating either that the absence is authorised or that it is not.

These messages are received by the gateway server.

Periodically the client server polls the service provider requesting that any messages held by the service provider be downloaded to it.

These messages are then downloaded to the client server. The downloaded messages are stored with details of the sender and the time and date of their arrival at the service provider.

These replies are then associated with the sent messages using the sender's telephone number as the key. Where this is not sufficient keywords such as the students name within the message may be used.

Periodically the data is automatically analysed and reports in line with user specified rules are produced.

For example a report may be produced showing only those students who are absent today who have also been absent more than three times in the past month. Another report might indicate that particular students from a predefined list are absent or late.

These reports are then communicated to a person in authority within the school. This communication may be by printing out by a particular printer, by an email message, by facsimile via a facsimile gateway or by any other appropriate means.

The client server may also simply send an alert to the person in authority enabling them to access the report directly at their leisure.

The advantage of such a system is that particular truancy events which may be identified as being serious or likely to be precursors to serious problems are automatically brought to the attention of the person in authority. This is done almost in real time, being available as soon as the information from the attendance roll is input into a school administration computer system. This is done without requiring any additional staffing resources from the schools support staff.

Although the invention has been shown and described in what is conceived to be the most practical and preferred embodiment it is to be recognised that departures can be made within the scope of the invention which is not to be limited to the details described herein but is to be accorded full scope of the appended claims so as to embrace any and all equivalent devices and apparatus.

## Claims

1. An electronic messaging system including means to receive and store transaction data; means to analyse said stored data; means to select a plurality of recipients of an electronic message based on said data; means to formulate an appropriate first electronic message to send to each of said selected recipients based on said data, alone or in combination with other stored data, thus forming a plurality of first electronic messages; means to send said plurality of first electronic messages to recipients; means to receive one or more second electronic messages in reply; means to record said first and second electronic messages and the details of the sending of the messages as message data; means to associate each said second electronic message with the first electronic message to which it is a reply.

2. The electronic messaging system of claim 1 further including means to analyse the message data to formulate reports based on the characteristics of said message data further including means to send such reports to a selected one or more recipients.

3. The electronic messaging system of claim 2 wherein the electronic messages are SMS messages.

4. The electronic messaging system of claim 2 wherein the electronic messages are MMS messages.

5. The electronic messaging system of claim 2 wherein the electronic messages are email messages.

6. An electronic messaging system including a client computer adapted to receive transaction data, said transaction data containing information pertinent to the sending of electronic messages, said client computer being adapted to analyse the transactional data, alone or in combination with other data stored by the client computer, the result of such analysis being a selection of recipient addresses and content suitable for a plurality of first electronic messages, said addresses and content being communicated to a gateway computer for transmission over an electronic messaging facility as first electronic messages, said gateway being adapted to receive second electronic messages addressed to the client computer from the electronic messaging facility and to direct such messages to the client computer said client computer being adapted to receive such second electronic messages, the client computer being further adapted to analyse said second electronic messages and to associate each second electronic message with the first electronic message to which the second electronic message is a reply.

7. The electronic messaging system of claim 6 wherein the client computer is further adapted to analyse message data, being the first and second electronic messages and details of the sending and receipt of those messages, to formulate reports based on the characteristics of said message data, the client computer being further adapted to send such reports to a selected one or more recipients.

8. The electronic messaging system of claim 7 wherein the electronic messaging facility is a mobile telephony network adapted to carry SMS and/or MMS traffic.

9. The electronic messaging system of claim 7 wherein the electronic messaging facility is an email system.

10. The electronic messaging system of claim 7 wherein the transaction data is a school attendance roll.

11. The electronic messaging system of claim 10 wherein the first electronic messages are sent to parents or guardians of students marked on the roll as absent or late without explanation informing them of this absence or lateness, and the second electronic messages are responses to the first messages indicating whether or not the absence or lateness is authorised.

12. The electronic messaging system of claim 11 wherein the reports correlate the reported absence or lateness of a particular student with that student's historical attendance record.

13. A method of analysis of electronic messaging including the steps of;
providing a system for sending and receiving electronic messages as computer data;
receiving transactional data pertinent to sending electronic messages;
storing rules for the analysis of said transactional data;
storing templates for the construction of electronic messages;
using said rules and templates to construct an electronic message based on the transactional data, including selection of one or more recipient addresses;
sending said electronic messages and receiving any electronic messages in reply;
associating each of the reply messages with the sent message to which it is a reply.

14. The method of claim 13 further including the steps of analysing the sent and reply message data to formulate reports based upon characteristics of that data;
communicating said reports to authorised recipients.

15. The method of claim 14 wherein the electronic messages are sent to parents or guardians of students marked on the roll as absent or late without explanation informing them of this absence or lateness, and the replymessages are responses to the first messages indicating whether or not the absence or lateness is authorised.

16. The method of claim 14 wherein the reports correlate the reported absence or lateness of a particular student with that student's historical attendance record.

17. The method of claim 14 wherein the transaction data is a school attendance roll.

18. The method of claim 14 wherein the electronic messages are SMS messages.

19. The method of claim 14 wherein the electronic messages are MMS messages.

20. The method of claim 14 wherein the electronic messages are email messages.
